**Europäisches Patentamt**

**European Patent Office**

**Office européen des brevets**

(11) Veröffentlichungsnummer: **0 216 772**
**B1**

(12) **EUROPÄISCHE PATENTSCHRIFT**

(45) Veröffentlichungstag der Patentschrift: **24.10.90**

(21) Anmeldenummer: **85902982.9**

(22) Anmeldetag: **05.06.85**

(86) Internationale Anmeldenummer:
**PCT/EP85/00271**

(87) Internationale Veröffentlichungsnummer:
**WO 86/00180 03.01.86 Gazette 86/01**

(51) Int. Cl.⁵: **H 02 K 44/08, H 05 H 1/24**

(54) **VERFAHREN ZUR ERZEUGUNG EINES PLASMAS UND EIN MHD-GENERATOR.**

(30) Priorität: **07.06.84 DE 3421129**
**29.05.85 DE 3519162**

(43) Veröffentlichungstag der Anmeldung:
**08.04.87 Patentblatt 87/15**

(45) Bekanntmachung des Hinweises auf die
Patenterteilung:
**24.10.90 Patentblatt 90/43**

(84) Benannte Vertragsstaaten:
**DE FR GB IT NL**

(56) Entgegenhaltungen:
**US-A-3 480 805**
**US-A-4 016 439**
**US-A-4 267 488**

**Die Akte enthält technische Angaben, die nach
dem Eingang der Anmeldung eingereicht
wurden und die nicht in dieser Patentschrift
enthalten sind.**

(73) Patentinhaber: **GILLISSEN, Franz**
**Ahornstrasse 8**
**D-5014 Kerpen-Türnich (DE)**

(72) Erfinder: **GILLISSEN, Franz**
**Ahornstrasse 8**
**D-5014 Kerpen-Türnich (DE)**

(74) Vertreter: **Sparing Röhl Henseler Patentanwälte**
**European Patent Attorneys**
**Rethelstrasse 123**
**D-4000 Düsseldorf 1 (DE)**

**Beschreibung**

Die Erfindung betrifft einen MHD-Generator nach dem Oberbegriff des Anspruchs 1, und ein Verfahren zur Erzeugung eines Plasmas nach dem Oberbegriff des Anspruchs 7.

Ein MHD-Generator dient zur Erzeugung elektrischer Energie aus thermischer Energie ohne mechanisch bewegte Teile. Das hierzu benötigte thermisch ionisierte Gas wird im allgemeinen extern erzeugt und in den MHD-Generator eingespeist. Die zur Aufheizung des Gases benötigte Wärme wird dabei von fossilen Brennstoffen oder Kernreaktoren bereitgestellt. Durch den Hall-Effekt wird senkrecht zur Gasströmung und zur Magnetfeldrichtung eine Spannung induziert, die mit Hilfe von Elektroden abgegriffen werden kann und einem Verbraucher zuführbar ist. Das austretende Gas weist noch eine so hohe Temperatur auf, daß es die Energie für einen normalen Wärmekraftprozess noch zu liefern vermag.

Die Benutzung eines MHD-Generators zur Erzeugung elektrischer Energie ist derzeit jedoch noch mit großen Schwierigkeiten verbunden, da einerseits die Vorrichtungen zur Aufheizung des Gases bereitgestellt werden müssen und andererseits die hohen Temperaturen des Plasmas eine starke Beanspruchung der Materialien bewirken.

Aufgabe der Erfindung ist es daher, einen MHD-Generator bzw. ein Verfahren nach dem Oberbegriff des Anspruchs 1 bzw. 7 zu schaffen, die die Erzeugung elektrischer Energie in wirtschaftlicher Weise ermöglichen.

Diese Aufgabe wird entsprechend dem kennzeichnenden Teil des Anspruchs 1 bzw. 7 gelöst.

Zur Erzeugung eines heißen Plasmas und/oder eines elektrischen Stroms ist ein System von hohlen Strömungszylindern vorgesehen, welches mindestens zwei Strömungszylinder aufweist, die von einem gemeinsamen Raum ausgehen, wobei innerhalb der Strömungskanäle jeweils eine Gasströmung erzeugt wird, die sich in wendelförmigen Bahnen, gleichsinnig drehend, um die Feldlinien des axialen Magnetfeldes auf den gemeinsamen Raum zubewegen, um dort ein Wirbelstromzentrum zu bilden.

Der MHD-Generator kann insbesondere so ausgebildet sein, daß die hohlen Strömungszylinder tetraedrig zueinander ausgerichtet angeordnet sind. Hierzu werden vier Strömungskanäle ausgehend von dem gemeinsamen Raum inmitten der Ummantelung des Systems von hohlen Strömungszylindern in Richtung und Lage der Pyramidenspitzen angeordnet.

Mit dem erfindungsgemäßen MHD-Generator wird das durch eine Initialzündung, z.B. einen Lichtbogen, oder mit Hilfe von Plasmakanonen erzeugte Plasma in eine Wirbelstrombewegung überführt. Weiterhin erzeugen die ausströmenden heißen Gase Spannungen, die einem Verbraucher zuführbar oder in das Wirbelstromgebiet des Strömungshohlkörpers zur Erreichung sehr hoher Plasmatemperaturen einkoppelbar sind.

Weitere Ausgestaltungen der Erfindung sind der nachstehenden Beschreibung und den Unteransprüchen zu entnehmen.

Die Erfindung wird nachstehend anhand der in den beigefügten Abbildungen dargestellten Ausführungsbeispiele näher erläutert.

Fig. 1 zeigt im Querschnitt ein erstes Ausführungsbeispiel des MHD-Generators.

Fig. 2 zeigt im Querschnitt ein zweites Ausführungsbeispiel des MHD-Generators.

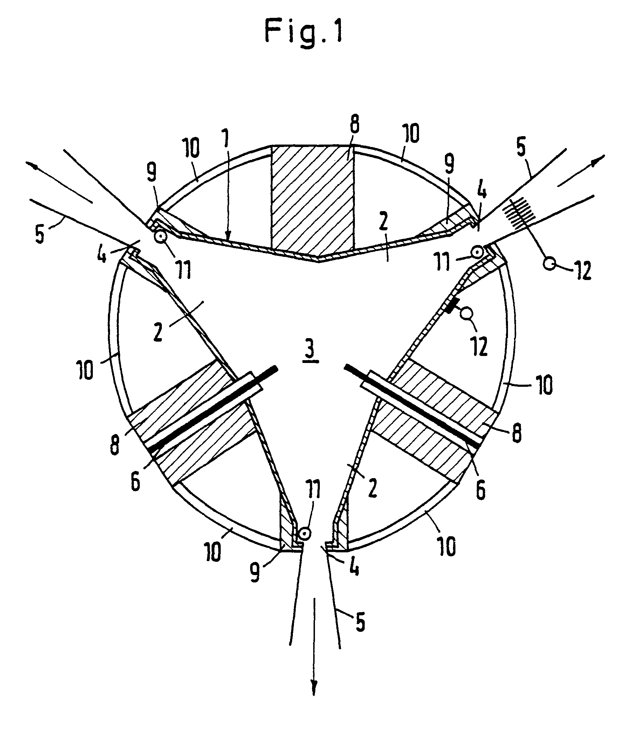

Der in Fig. 1 dargestellte MHD-Generator umfaßt ein räumlich konzipiertes Mehrkanal-Strömungssystem mit einem Strömungshohlkörper 1, der vier innenliegende und zueinander ausgerichtete Strömungskanäle 2 und einen von letzteren gebildeten gemeinsamen zentralen Bereich 3 aufweist. Die Strömungskanäle 2 sind hierbei derart ausgebildet, daß die Gesamtheit ihrer Begrenzungsflächen den Strömungshohlkörper 1 bilden. Jeder Strömungskanal 2 erstreckt sich unter kontinuierlicher Vergrößerung seines Durchmessers in Richtung des zentralen Bereichs 3. Ausgehend von den vier Kegelstumpfecken sind alle Strömungskanäle 2 auf den Raummittelpunkt ausgerichtet und bilden dort den zentralen Bereich 3, der durch die konstruktive Verbindung der vier Strömungskanäle 2 innerhalb des Strömungssystems gebildet wird. Dabei endet jeder Strömungskanal 2 außenseitig in einer Austrittsöffnung 4, die zudem noch eine nach außen sich erweiternde Lavaldüse 5 aufweist. Zur Durchführung einer Initialzündung sind mindestens zwei Zündelektroden 6 vorgesehen, die durch die Seitenflächen des Strömungshohlkörpers 1 hindurch geführt sind und in den zentralen Bereich 3 hineinragen. Zueinander sind die Zündelektroden 6 dabei so angeordnet, daß sie einen Abstand voneinander aufweisen und unter einem stumpfen Winkel zueinander angeordnet sind. Symmetrisch zwischen den Strömungskanälen 2 sind Magnete 8 angeordnet. Den Magneten 8 sind dabei Gegenpole 9 zugeordnet, die benachbart zu den Austrittsöffnungen 4 befestigt sind, wobei die Magnete 8 und die Polschuhe 9 jeweils über ein Eisenjoch 10 verbunden sind. Durch diese Magnetanordnung wird ein Magnetfeld erzeugt, das von den Magneten 8 ausgehend sich im Raum des Strömungshohlkörpers ausbreitet, um wiederum axialsymmetrisch von den Gegenpolen 9, die die Strömungskanäle 2 ringförmig umschließen, gesammelt zu werden, wobei der zentrale Bereich des Hohlkörpers 1 relativ feldfrei bleibt. Die Magnete 8 sind hierbei gleich gepolt.

Jeder Strömungskanal 2 weist eine Gaszuführung 11 auf, deren Austrittsöffnung in Umfangsrichtung tangential zur zylindrischen Innenwand der Strömungskanäle 2 weist. Das über die Gaszuführung 11 eingeführte Gas strömt mit hoher Geschwindigkeit, jeweils eine wendelförmige Bahn beschreibend, in Richtung des zentralen Bereichs 3. Alle Gasströmungen sind hierbei mit gleichem Drallsinn auf den gemeinsamen Raum 3 ausgerichtet. Das heiße Gas strömt von dem Wirbelstromzentrum durch die Strömungskanäle 2 wieder zurück in Richtung Austrittsöffnung 4. Diese Austrittsströmung wird dadurch erzeugt, daß die einströmenden Drallströmungen im Wirbelstromzentrum eine Strömungsumkehr erfahren, so daß die austretenden Gasströmungen koaxial zur Längsachse der jeweiligen Strömungskammer 2 durch den Drallstrom hindurch in Richtung Austrittsöffnung 4 sich bewegen. Die ursprüngliche Drallströmung geht dabei allmählich in eine parallele Gasströmung über. Um diesen Austrittsgasen die verbliebene Restladung, die im Zentralbereich nicht ausgeglichen wurde, bei einer Expansion entnehmen zu können, strömen die austretenden Gase nach dem Austritt durch die Austrittsöffnung 4 durch eine Lavaldüse 5, in der die Austrittsgase nochmals eine Entspannungsphase mit Abkühlung erfahren. Mit Elektroden 12 in den Lavaldüsen 5 und an einer zugeordneten Begrenzungswand eines Strömungskanals 2 kann diese elektrische Energie abgegriffen werden. Es wird somit eine elektrostatische Generatorstufe geschaffen, die die Restdynamik des Plasmas nutzt.

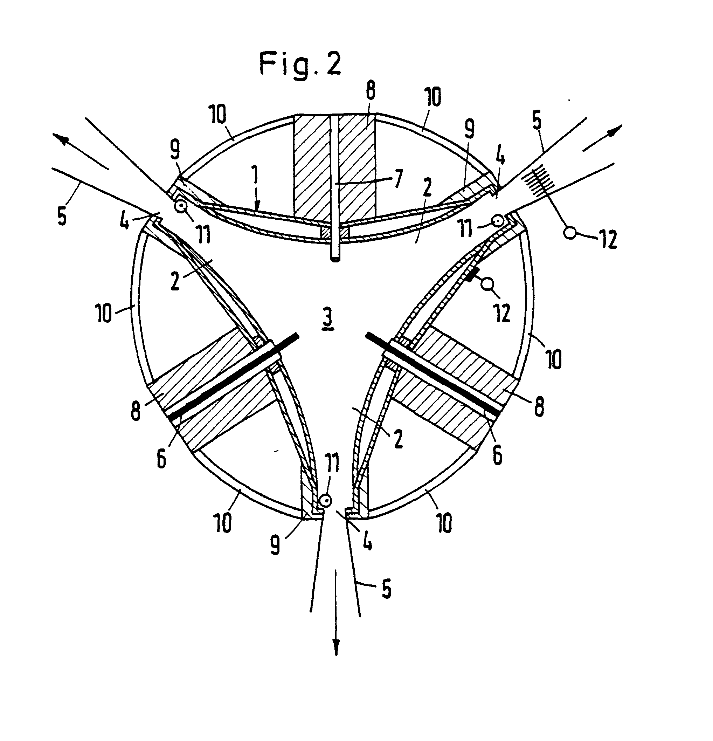

Fig. 2 zeigt ein zweites Ausführungsbeispiel des MHD-Generators, bei dem der Generator als Brennkammer für fossile Brennstoffe und als Schnellverdampfer ausgebildet ist. Der Strömungshohlkörper 1 weist hierzu eine zweischalige Ummantelung auf und besitzt eine Brennstoffzufuhreinrichtung 7, die in den vom Strömungshohlkörper 1 begrenzten Verbrennungsraum hineingeführt ist, um diesen mit Brennstoff zu versorgen. Der Generator kann somit als Wärmetauscher oder Kessel zur effektiven Nutzung der Verbrennungswärme Verwendung finden.

## Patentansprüche

1. MHD-Generator mit einem Strömungshohlkörper (1), der auf einen zentralen Bereich zulaufende Strömungskanäle (2) und eine mittels Zündelektroden erzeugbare Gasplasmaquelle umfaßt, wobei benachbart zu dem Strömungshohlkörper (1) ein Magnet (8) angeordnet ist, dessen Magnetfeld senkrecht zur Plasmastromrichtung sowie parallel zur Längsachse der Strömungskanäle verläuft und zum Abgreifen elektrischer Potentiale senkrecht zur Magnetfeld- und Plasmastromrichtung zwei Elektroden vorgesehen sind, dadurch gekennzeichnet, daß jeder Strömungskanal (2) jeweils eine in Umfangsrichtung tangentiale Gaszuführung (11) zur Erzeugung einer Gasströmung aufweist, die eine wendelförmige Bahn um die Magnetfeldlinien beschreibend sich in Richtung auf den zentralen Bereich (3) der Strömungskanäle (2) bewegt, und jeder Strömungskanal (2) außenseitig in eine Austrittsöffnung (4) endet.

2. MHD-Generator nach Anspruch 1, dadurch gekennzeichnet, daß die Strömungskanäle (2) im wesentlichen an den Ecken eines Tetraeders einerseits und in dem zentralen Bereich (3) andererseits enden, wobei vier Strömungskanäle (2) auf ein Symmetriezentrum des Strömungshohlkörpers (1) ausgerichtet sind.

3. MHD-Generator nach Anspruch 2, dadurch gekennzeichnet, daß Magnete (8) mit zugeordneten Polschuhen (9) an jeweils einem Eisenjoch (10) als Verbindungsteil vorgesehen sind, wobei die Magnete (8) und Polschuhe (9) derart benachbart zum Strömungshohlkörper (1) angeordnet sind, daß ein magnetisches Streufeld erzeugt wird, dessen magnetische Feldlinien parallel zur Längsachse des jeweiligen Strömungskanals (2) verlaufen, während der gemeinsame Raum (3) weitgehend feldfrei bleibt.

4. MHD-Generator nach einem der Ansprüche 1 bis 3, dadurch gekennzeichnet, daß die Austrittsöffnungen (4) jeweils eine nach außen sich erweiternde Lavaldüse (5) aufweisen.

5. MHD-Generator nach einem der Ansprüche 1 bis 4, dadurch gekennzeichnet, daß mindestens zwei Zündelektroden (6) mit Abstand zueinander in den zentralen Bereich (3) ragen, wobei je eine Zündelektrode (6) durch die Mittelachse eines Magneten (8) geführt ist und diese als Plasmakanonen ausgebildet sind.

6. MHD-Generator nach einem der Ansprüche 1 bis 5, dadurch gekennzeichnet, daß mindestens eine in einen vom Strömungshohlkörper (1) begrenzten Verbrennungsraum geführte Brennstoffzufuhreinrichtung (7) vorgesehen ist, die Brennstoff in einen mit einer zweischaligen Ummantelung ausgebildeten Strömungshohlkörper (1) einspeist.

7. Verfahren zur Erzeugung eines Plasmas durch Aufheizung eines strömenden Gases, dadurch gekennzeichnet, daß in einem Strömungshohlkörper mindestens zwei Gasströmungen erzeugt werden, die sich wendelförmig und mit gleichem Drallsinn um die Streufeldlinien eines axialen äußeren Magnetfeldes bewegen und derart aufeinander zugerichtet sind, daß sie im Zentralbereich des Strömungshohlkörpers aufeinandertreffen und dort ein Wirbelzentrum bilden, wo sie mittels einer Initialzündung zur thermischen Ionisierung aufgeheizt werden, und das heiße ionisierte Gas von dem Zentralbereich durch die Strömungskanäle wieder zurück in Richtung Austrittsöffnungen strömt, wobei die ursprüngliche Drallströmung allmählich in eine parallele Gasströmung übergeht und dabei nach dem magnetoplasmadynamischen Prinzip eine elektrische Energie erzeugt, die in das Wirbelzentrum eingekoppelt wird.

8. Verfahren nach Anspruch 7, dadurch gekennzeichnet, daß die aus dem Strömungshohlkörper austretenden heißen Gase durch Lavaldüsen geleitet werden.

## Revendications

1. Générateur MHD comportant un corps d'écoulement creux (1) qui entoure des conduits d'écoulement (2) dirigés vers une zone centrale, une source de plasma gazeux pouvant être générée au moyen d'électrodes d'allumage, un aimant (8) disposé au voisinage dudit corps creux (1) et dont le champ magnétique s'étend perpendiculairement à la direction du flux de plasma et parallèlement à l'axe longitudinal des conduits d'écoulement et, perpendiculairement à la direction du champ magnétique et du flux de plasma, deux électrodes prévues pour l'absorption des potentiels électriques, caractérisé par le fait que chaque conduit d'écoulement (2) présente respectivement une conduite d'introduction de gaz (11) tangentielle à la direction périphérique en vue d'engendrer un écoulement gazeux qui se déplace en direction de la zone centrale (3) des conduits d'écoulement (2) en décrivant une trajectoire hélicoïdale autour des lignes du champ magnétique, et que chaque conduit d'écoulement (2) débouche, du côté extérieur, sur un orifice d'échappement (4).

2. Générateur MHD selon la revendication 1, caractérisé par le fait que les conduits d'écoulement (2) débouchent, d'une part, sensiblement aux angles d'un tétraèdre et, d'autre part, dans la zone centrale (3), formant ainsi quatre conduits d'écoulement (2) dirigés vers un centre de symétrie du corps d'écoulement creux (1).

3. Générateur MHD selon la revendication 2, caractérisé par le fait que des aimants (8) à pièces polaires (9) associées sont disposés chacun sur une culasse (10) en fer servant d'élément de liaison, lesdits aimants (8) et lesdites pièces polaires (9) étant disposés au voisinage du corps d'écoulement creux (1) de manière à produire un champ de dispersion magnétique dont les lignes de champ magnétique s'étendent parallèlement à l'axe longitudinal du conduit d'écoulement correspondant (2), tandis que la zone commune (3) reste dans une grande mesure extérieure au champ magnétique.

4. Générateur MHD selon l'une des revendications 1 à 3, caractérisé par le fait que les orifices d'échappement (4) comportent chacun une tuyère de Laval (5) s'élargissant vers l'extérieur.

5. Générateur MHD selon l'une des revendications 1 à 4 caractérisé par le fait qu'au moins deux électrodes d'allumage (6) pénètrent à une certaine distance l'une de l'autre dans la zone centrale (3), chaque électrode d'allumage (6) traversant un aimant (8) suivant son axe, formant ainsi des canons à plasma.

6. Générateur MHD selon l'une des revendications 1 à 5, caractérisé par le fait qu'au moins un dispositif d'alimentation en combustible (7) est prévu et traverse une chambre de combustion délimitée par le corps creux d'écoulement (1), ce dispositif alimentant ledit corps creux d'écoulement (1) lequel est à double paroi.

7. Procédé pour la génération d'un plasma par chauffage d'un gaz en mouvement, caractérisé par le fait qu'à l'intérieur d'un corps d'écoulement creux sont engendrés au moins deux courants de gaz qui se déplacent suivant une trajectoire hélicoïdale et dans le même sens autour des lignes de dispersion d'un champ magnétique extérieur axial et qui sont orientés l'un en direction de l'autre de telle sorte qu'ils se rencontrent dans la zone centrale du corps d'écoulement creux et y forment un centre d'écoulement tourbillonnaire où ils sont chauffés au moyen d'une allumage initial jusqu'à ionisation thermique, et que le gaz ionisé chaud s'écoule de la zone centrale à travers les conduits d'écoulement pour se diriger vers des orifices d'échappement, le flux hélicoïdal primitif devenant peu à peu un courant gazeux parallèle, une énergie électrique étant ainsi générée selon le principe magnétohydrodynamique, laquelle énergie est introduite par couplage dans le centre d'écoulement tourbillonnaire.

8. Procédé selon la revendication 7, caractérisé par le fait que les gaz chauds sortant du corps d'écoulement creux traversent des tuyères de Laval.

**Claims**

1. An MHD generator comprising a hollow flow member (1) comprising flow ducts (2) converging on a central region and a source of gas plasma generated by ignition electrodes, a magnet (8) being disposed near the hollow flow member (1) and having a magnetic field perpendicular to the direction of plasma flow and parallel to the longitudinal axis of the flow ducts and two electrodes being provided for tapping electric potentials at right angles to the magnetic field and the plasma flow, characterised in that each flow duct (2) has a gas inlet (11) for generating a gas flow, the inlet being tangential in the peripheral direction, the said flow moving in a helical path around the lines of magnetic force in the direction towards the central region (3) of the flow ducts (2), and each flow duct (2) ends externally in an outlet opening (4).

2. An MHD generator according to claim 1, characterised in that the flow ducts (2) end substantially at the corners of a tetrahedron at one end and in the central region (3) at the other end, four flow ducts (2) being aligned with a centre of symmetry of the hollow flow member (1).

3. An MHD generator according to claim 2, characterised in that magnets (8) and associated pole pieces (9) are provided on respective connecting iron yokes (10), the magnets (8) and pole pieces (9) being disposed adjacent the hollow flow member (1) so as to produce a magnetic leakage field having magnetic lines of force parallel to the longitudinal axis of the respective flow duct (2), whereas the common chamber (3) remains substantially free of a field.

4. An MHD generator according to any of claims 1 to 3, characterised in that the outlet openings (4) each comprise an outwardly widening Laval nozzle (5).

5. An MHD generator according to any of claims 1 to 4, characterised in that at least two ignition electrodes (6) are spaced apart and project into the central region (3), each ignition electrode (6) passing through the central axis of a magnet (8) and the magnets being constructed as plasma guns.

6. An MHD generator according to any of claims 1 to 5, characterised in that at least one combustion supply means (7) extending into a combustion chamber bounded by the hollow flow member (1) is provided and supplies fuel to a hollow flow member (1) provided with a two-part jacket.

7. A method of producing a plasma by heating a flowing gas, characterised in that at least two gas flows are produced in a hollow flow member and move in a helix and with the same direction of spin around the lines of force of an axial outer leakage magnetic field and are aligned relative to one another so that they meet at the central region of the hollow flow member and form an eddy centre, where they are initially ignited and heated to thermal ionization, and the hot ionized gas flows back from the central region through the flow ducts towards the outlet openings, during which process the original spinning flow gradually changes into a parallel flow and, by the magnetoplasmadynamic principle, produces electric energy which is coupled into the eddy centre.

8. A method according to claim 7, characterised in that the hot gases leaving the hollow flow member are conveyed through Laval nozzles.

# Fig.1

# Fig. 2